# EUROPEAN PATENT SPECIFICATION

(11) **EP 0 675 314 B1**
(45) Date of publication and mention of the grant of the patent: **05.03.1997**
(21) Application number: 94203195.6
(22) Date of filing: 03.11.1994
(51) Int. Cl.: F16L 47/00, B21D 39/04, B29C 65/56, B29D 23/24

(54) **A method and a device for jointing at least two plastic elements in a liquid- and/or gas-tight manner**
Verfahren und Vorrichtung zum flüssigkeits- und/oder gasdichten Verbinden von wenigstens zwei Rohrelementen aus Kunststoff
Procédé et dispositif de raccordement étanché aux liquides et/ou gaz de au moins deux éléments de tuyaux en plastique

(30) Priority: 05.11.1993 NL 9301914
(43) Date of publication of application: 04.10.1995
(73) Proprietor: NYLOPLAST EUROPE B.V., NL-3295 KG 'S-Gravendeel (NL)
(72) Inventor: Wulff, Frederik Karel Albert, NL-3063 GG Rotterdam (NL)
(74) Representative: Hooiveld, Arjen Jan Winfried

(56) References cited:
- EP-A- 0 599 103
- FR-A- 1 058 804
- FR-A- 1 271 863
- NL-A- 6 513 219
- NL-A- 7 216 939
- US-A- 3 798 097

## Description

The invention relates to a method and a device for jointing at least two plastic elements in a liquid- and/or gastight manner.

A method and a device of this type are generally known. The jointing of two plastic elements usually needs to take place in a liquid- and/or gastight manner. In this connection especially the liquid- and/or gastight jointing of two pipe sections, for example thermoplastic (PVC) pipe sections for use in sewage pipes, rainwater pipes, gas pipes, drainpipes etc. may be considered. In view of the large number of applications it will be apparent that in particular liquidtight pipe sections may be quite different from each other, not only as regards their shape but also as regards their technical characteristics, since generally each application has its specific requirements (relating to technique and shape). Thus pipe sections made of various plastic materials, of various shapes and of various material thicknesses are known.

A drawback of the known method and the known device is that, in the case of handwork, a constant quality of the joint as regards its liquid- and/or gastightness is not achieved, whilst the (production) costs involved are often (too) high, and that, when the work is carried out by mechanical means (e.g. injection moulding), it is not possible to obtain the required flexibility for jointing all kinds of plastic elements (in particular different as to shape and diameter) at acceptable cost.

The invention particularly relates to a method and a device for a method for jointing at least two plastic elements in a liquid- and/or gastight manner, whereby an edge of a first plastic element is at least partially placed in an opening of a second plastic element, the edge of the first plastic element being folded over an edge of the opening of the second plastic element under plastic deformation, using a pressure body.

Such a method is known from United States patent document No. US 3,798,097 (Mendenhall). This known method of jointing a plastic tube to the side of a plastic pipe to make a branched conduit, comprises the steps of:
- forming a hole in the side of the pipe smaller than the size of the tube;
- softening the pipe around said hole by means of a hot oil bath;
- deforming the pipe outwardly around said hole to form an outwardly projecting flange, while expanding the hole to a size sufficient to receive the tube;
- softening one end portion of the tube to a temperature at which it is plastically deformable and inserting said one end portion into said hole;
- plastically deforming said one end portion into an enlarged lip abutting the inside of the pipe around said hole;
- hardening said one end in the deformed condition;
- applying PVC solvent cement between the abutting portions of the tube and pipe;
- applying pressure (using an inflatable balloon as pressure body) to said abutting portions to press them together during bonding; and
- relieving said pressure after the tube and pipe are bonded together.

A drawback of the method known from United States patent publication No. US 3,798,097 is that the pressure exerted by the inflatable balloon on the above-mentioned abutting portions to press them together, is inadequate to provide an effective liquid- and/or gastight bond between the tube and the pipe. A further drawback of the known method that the use of PVC solvent cement as a bonding material is needed, which not only renders the method uneconomical and difficult to apply, but which also deteriorates after a longer period, having negative effects on the quality of the bond between the tube and the pipe. A further drawback is that the tube and the pipe can only be jointed at an angle of 90° which limits the applicability of the known method. Still a further drawback is that the method of the United States patent publication is complicated and expensive in view of the use of all kind of materials: expanding mandril, inflatable balloon, hot oil bath, PVC solvent cement etc.

The object of the invention is to provide a very economical, highly flexible (as regards production possibilities) and reliable method and a device for jointing at least two plastic elements in a really liquid- and/or gastight manner (i.e. with a bond of high quality).

In order to accomplish this objective a method of the kind mentioned in the introduction is according to the invention characterized in that the edge of the first plastic element is pressed against a rigid curved guiding surface of a rigid pressure body being placed in the second plastic element at the opening thereof, that the edge of the first plastic element along the guiding surface is pushed radially outwards and over the edge of the opening of the second plastic element, that the edges of both plastic elements are pressed together to form a joint by exerting pressure on opposite sides of the joint by means of the pressure body and a pressure means, whereby the edge of the opening of the second plastic element is clamped between edges of the first plastic element, or between the edge of the first plastic element and an edge of an additional external element, and that use is made of a sealing element at least partially between the edges. It is noted that said second plastic element is sleeved over said pressure body, and in such a manner, that the pressure body is located near the opening of said second plastic element. The first plastic element is preferably placed in the opening of the second plastic element by hand, whereby it is already slightly pressed against the pressure body. Then the first plastic element is pressed against the pressure body by the pressure means, whereby the edge of the first plastic element is folded over the edge of the opening of the second plastic element. By exerting pressure on opposite sides of the joint, the joint is pressed firmly, providing - in combination with the (rubber) sealing ring - an excellent liquid- and/or gastight jointing of the plastic elements. Pressure is exerted on opposite sides of the edges without there is any pushing off against any part of one of the two plastic elements, so that there is no limitation as to the amount of pressure exerted, while no fractures in the material of the plastic elements will occur.

Clamping the edge of the opening of the second plastic element increases the firmness of the joint between the at least two elements.

Another embodiment of the method according to the invention is characterized in that the at least two plastic elements are jointed at an angle varying between 0° and 180°.

Another embodiment of the method according to the invention is characterized in that the at least two plastic elements are pipe sections.

Another embodiment of a method according to the invention is characterized in that said plastic deformation is achieved by heating.

Another embodiment of a method according to the invention is characterized in that said pressure body is at least partially heated by heating means present therein. Preferably said heating means are heating elements present within the pressure body, which can be connected to the mains.

Another embodiment of a method according to the invention is characterized in that the edge of said first pipe section is preheated prior to said first pipe section being at least partially placed in the opening of said second pipe section. The advantage of this is that as soon as the edge of said first pipe section is placed in the opening of said second pipe section by hand, and as a consequence said edge is already slightly pressed against the pressure body, the edge of said first pipe section is already folded over the edge of the opening of said second pipe section a little.

Another embodiment of a method according to the invention is characterized in that the sealing element is a sealing ring being provided along the opening of said second pipe section before jointing said first and said second pipe sections. Preferably the sealing ring has a substantially L-shaped or U-shaped cross-section. The sealing ring provides an optimum liquid- and gastight joint of the two pipe sections.

Another embodiment of a method according to the invention is characterized in that the opening of the second pipe section is preferably provided by means of a sawing/cutting operation, whereby said second pipe section is held at an angle with respect to preferably a sawing/cutting device, said angle at least substantially corresponding with an angle between the first and second pipe sections to be jointed. As a result of this a correct shape (for example an elliptic shape) of the opening of the second pipe section is obtained in a particularly simple, elegant manner when said first and said second pipe section are to be jointed at an angle of for example 45° or 60°.

One embodiment of a device according to the invention is characterized in that said pressure body at least substantially consists of a pressure plate, and said pressure means are provided with a pressure element. The pressure plate has a guiding surface (butting face), against which the edge of the first pipe section may butt under plastic deformation.

Another embodiment of a device according to the invention is characterized in that said pressure plate comprises at least two parts, which are movable with respect to each other. This is important when the diameter of the opening of the second pipe section is at least substantially larger than the diameter of the second pipe section itself. By moving the parts of the pressure plate with respect to each other the effective diameter of the pressure plate is reduced, as a result of which it will be easy to slip the second pipe section over the pressure plate. When the pressure plate is located near the opening of the second pipe section, the parts of the pressure plate are returned to their initial position with respect to each other.

Another embodiment of a device according to the invention is characterized in that said pressure plate is provided with electric heating means.

Another embodiment of a device according to the invention is characterized in that said pressure means include a piston/cylinder assembly. Said piston/cylinder assembly may for example exert pressure on the first pipe section via a pressure disk, which will be described in more detail hereafter in the description of the Figures.

Another embodiment of a device according to the invention is characterized in that said pressure means are provided with a pressure element, which can move into and out of said first pipe section.

Another embodiment of a device according to the invention is characterized in that said pressure element includes a projecting pull rod, which may engage a drawing attachment, which can push or pull the pull rod in a direction parallel to the axis of said first pipe section.

Another embodiment of a device according to the invention is characterized in that said drawing attachment at least substantially consists of a drawing block provided with means for engaging the pull rod, said drawing block being movable along a line which extends parallel to the central axis of said second pipe section.

The invention will be explained in more detail hereafter with reference to Figures illustrated in a drawing, in which like parts are numbered alike in the various Figures.

Figure 1 shows a first embodiment of a device according to the invention, by means of which two plastic pipe sections are jointed at an oblique angle with respect to each other.

Figures 2 and 3 show a second and a third embodiment respectively of a device according to the invention, wherein two plastic elements are jointed at a right angle with respect to each other.

Figures 4 - 7 show examples of joints between two plastic elements made in accordance with the method according to the invention.

Figure 8 shows a two-part pressure body for use in the device of Figure 1.

Figure 9 shows another embodiment of a device according to the invention, by means of which a first plastic element can be jointed in situ (in the field) to a second plastic element already in use.

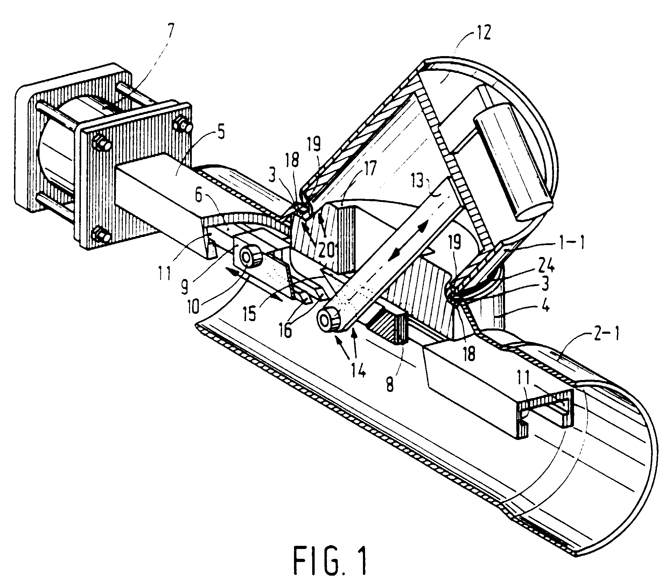

Figure 1 shows, partly in section, plastic elements in the shape of pipe sections 1-1 and 2-1. The pipe section 2-1 is provided with an opening having an edge 3, which is directed radially inwards in the illustrated embodiment. The edge 3 is located on an elevation or platform 4, which is provided on the pipe section 2-1. The pipe section 2-1 is sleeved over an arm 5, in which a rod 6 is located, which can move from the left to the right (in the direction indicated by the arrow). The rod 6 can be moved by means of a piston/cylinder assembly 7 mounted on one end of the arm 5. Said piston/cylinder assembly 7 may be a hydraulically, pneumatically or for example electrically operated assembly. Pull-push means 8, 9 are secured to the rod 6. A guide system, built up of rollers 10 mounted on the pull-push means 8, 9 in the illustrated embodiment, and guiding slots 11 provided longitudinally in the arm 5 for receiving the rollers 10, guides the reciprocating movement of the rod 6 within the arm 5. It is noted that said pull-push means 8, 9 form one block.

In the pipe section 1-1, which makes an angle of 45° with the pipe section 2-1 in the embodiment shown in Figure 1, pressure means are present, said pressure means being made up of a pressure element 12, which closely abuts the inner circumference of the pipe section 1-1. One side of a pull rod 13 is secured to said pressure element 12. The other side of said pull rod 13 is provided with guide means 14 in the shape of rollers. The pull-push means 8, 9 are provided with guideways 15 and 16 respectively for co-operation with the guide means 14, so that when the rod 6 moves towards the right together with the pull means 8 and the push means 9, the sloping guideway 16 (which comes into contact with the guide means 14) will push the pull rod 13 towards the outside. Conversely, when the rod 6 moves to the left the guideway 15 and the guide means 14 will come into contact with each other, as a result of which the pull rod 13 and thus the pressure element 12 will be pulled downward.

When using the method for jointing the two pipe sections 1-1 and 2-1 in a liquid- and/or gastight manner, the pipe section 2-1 is sleeved over the arm 5, in such a manner that a pressure body in the shape of a pressure plate 17 is located near the opening in the pipe section 2-1 formed on the platform 4. The pressure plate 17 is integral with the arm 5. In order to joint the two pipe sections 1-1 and 2-1 an edge 18 of the pipe section 1-1 is softened, which is usually done by preheating the edge 18 in a manner yet to be explained in more detail. The softened edge 18 is folded over the edge 3 of the pipe section 2-1 in the following manner. First the pipe section 1-1 is pressed against the pressure plate 17 by hand, as a result of which the preheated edge 18 of the pipe section 1-1 along an abutting surface 20 of the pressure plate 17 already extends radially outward to a slight degree. Then the pressure element 12 inserted into the pipe section 1-1 is moved down - first by hand and then via the pull rod 13 in the manner described above - as a result of which the edges 18 and 19 of the pipe section 1-1 with the edge 3 of the pipe section 2-1 located therebetween will be pressed together, thus forming a liquid- and/or gastight joint.

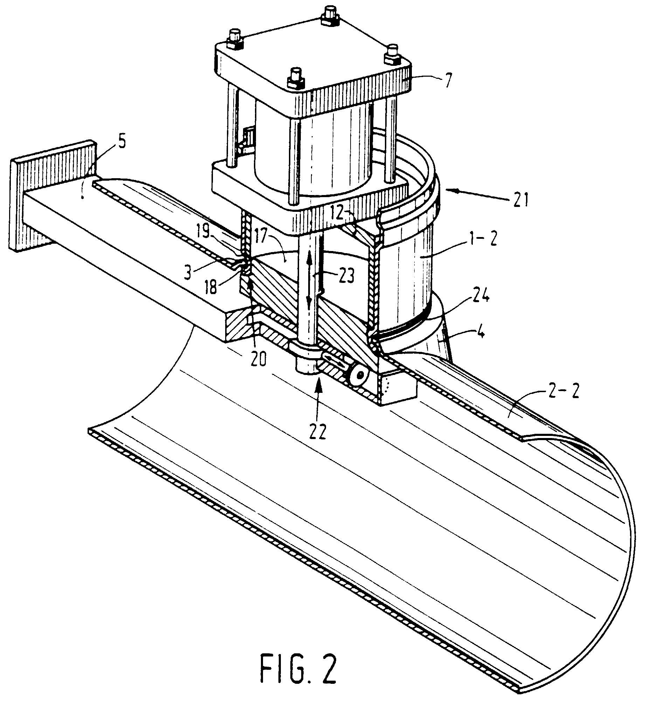

Another diagrammatically illustrated embodiment of the device for making a joint between two pipe-sections is shown in Figure 2. A substantially perpendicular joint between pipe sections 1-2 and 2-2 is made by means of a piston/cylinder assembly 7 provided within the pipe section 1-2. After the pipe section 2-2 has been sleeved over the arm 5 and the pressure element 12 has been introduced into the pipe section 1-2, a pull rod 23 of the piston/cylinder assembly 7 is locked to the arm 5 under the pressure plate 17 by locking means 22. Upon activation of the piston/cylinder assembly 7 the edges 18 and 19 of the pipe section 1-1 and the edge 3 of the pipe section 2-2 are pressed together in the manner already explained, thus providing the liquid- and/or gastight joint.

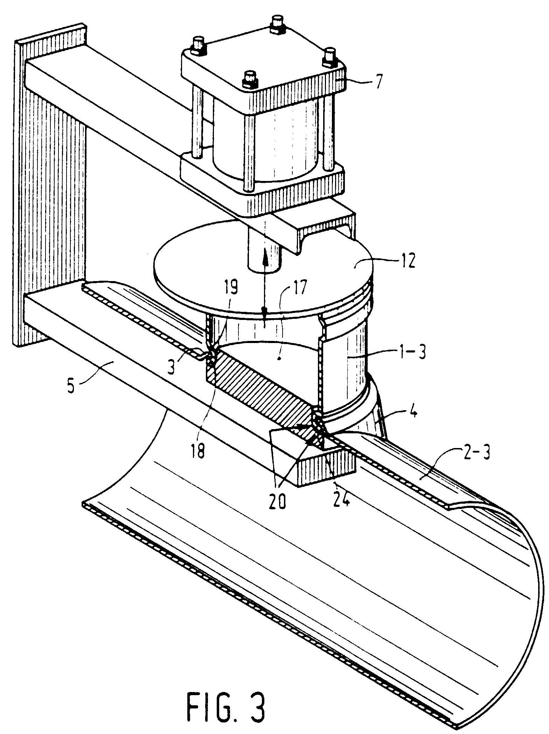

Figure 3 diagrammatically illustrates another embodiment of the device according to the invention, corresponding with the one shown in Figure 2. In this embodiment the pressure means for pressing the edge 18 of the first pipe section 103 against the pressure plate 17 are not in the form of the pressure element 12, but in the form of a pressure disk 12. The pressure disk 12 is pressed against the free end of the pipe section 1-3 by means of the piston/cylinder assembly 7, thus forming the liquid- and/or gastight joint again.

Of course it is not essential for the present invention in what manner the respective edges 18, 19 and 3 are folded together. With the manner illustrated with regard to the two embodiments the respective edges 18, 19 and 3 are brought together in such a manner, that the edge 3 is clamped between the two edges 18 and 19 located on either side of the edge 3.

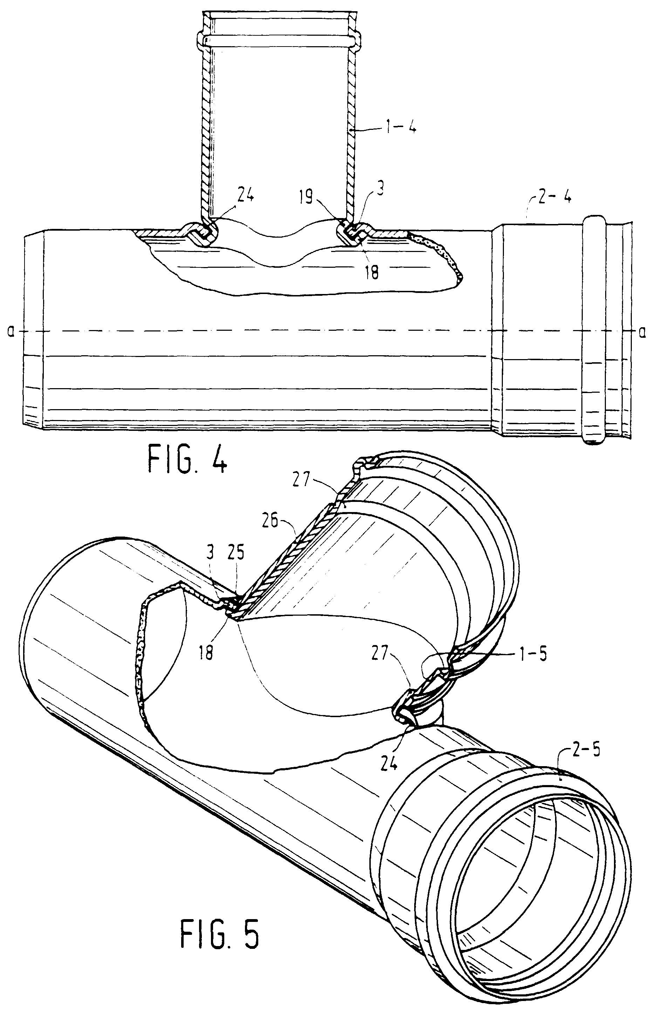

Similarly the edge 3, which is not located on a platform in this embodiment, is folded back in the direction of the central axis a-a of the pipe section 2-4 in the embodiment shown in Figure 4. Of course the shape of the actual pressure part of the pressure element 12 (not shown in this Figure), as well as the butting face 20 of the pressure plate 17 (likewise not shown) are adapted thereto with a view to making a joint of the type mentioned.

Figure 5 shows an embodiment of in particular a joint between pipe sections 1-5 and 2-5, in which the edge 3 of the pipe section 2-5 is clamped between the radially outwardly flared edge 18 and an edge 25 of a pipe 26 sleeved over the pipe section 1-5 beforehand. The pipe 26 functions to locally strengthen the pipe 1-5 and is used in this specific embodiment for the joint to be formed. The joint is made by moving the pressure element 12 (not shown in this Figure) downwards in the direction of the pressure plate 17 (likewise not shown) in the manner already explained above. In this embodiment the actual pressure part of the pressure element 12 presses down on the outer circumferential edge 27 of the pipe section 1-5 when the method according to the invention is used.

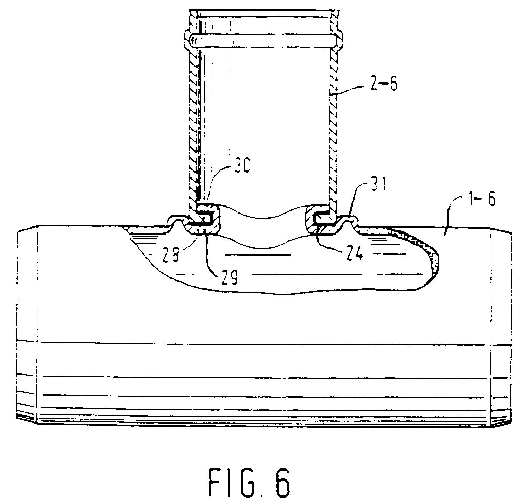

Figure 6 shows an embodiment of a joint between pipe sections 1-6 and 2-6. The pipe section 2-6 has a radially inward edge 28, which is enclosed by edges 29 and 30 of the pipe section 1-6. This embodiment moreover shows that a shoulder 31 is provided around the edges 28, 29 and 30 to be jointed, which shoulder gives the joint additional mechanical strength and stability. It would be possible to leave out the shoulder 31 per se, if the liquid- and/or gas pressure built up within the pipe sections 1-6 and 2-6 is not too large in practice.

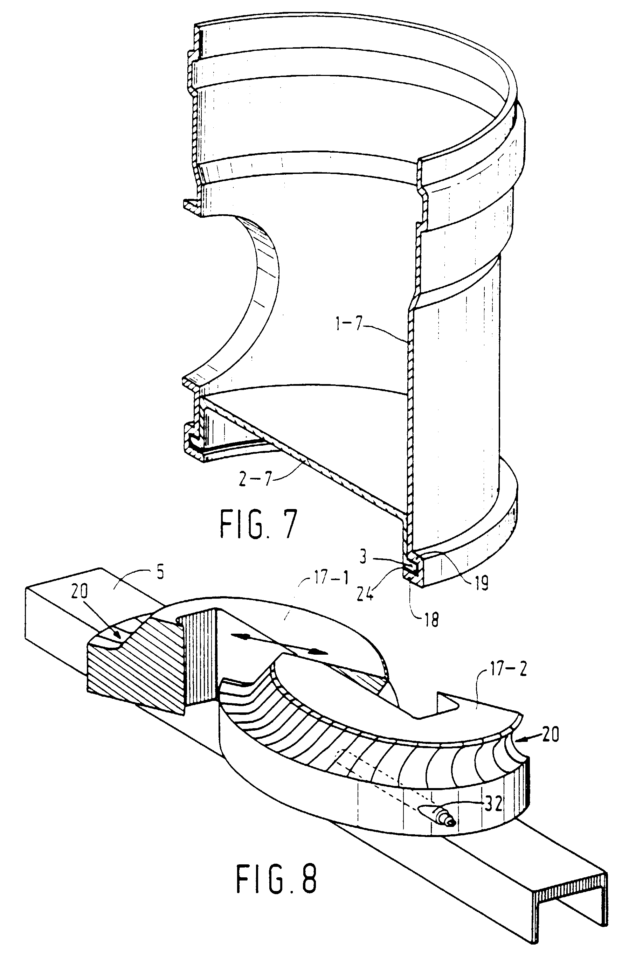

Figure 7 shows an embodiment wherein a pipe section 1-7 is provided with a plastic element 2-7 in the shape of a bottom jointed to the pipe section in the manner described in the above. Also in this embodiment the joint is made by using a suitably shaped pressure element 12 (not shown), whereby the edges 18 and 19 of the pipe section 1-7 and the intermediate edge 3 of the plastic element 2-7 are pressed together.

For all the above-described embodiments it holds that in order to obtain an improved seal between the two pipe sections there is a sealing element 24, which may for example have an L-shaped or U-shaped cross-section. The sealing element 24 is preferably slipped between the two edges to be jointed prior to jointing the pipe sections, whereupon said edges are clamped together under plastic deformation.

When jointing the respective pipe sections at a desired angle with respect to each other, the angle at which a sawing/cutting device is to provide the opening in the platform 4 should preferably be chosen such that said angle is substantially the same as the angle which the respective pipe sections will make with each other. This leads to a great dimensional accuracy of the oval or circular (in case of an angle of 90°) opening to be formed in the platform 4.

Before the edges are jointed it is possible to soften in particular the edges 3, 18, 19, 25, 28, 29 and 30 in question, if desired, by exposing said edges to hot air or a hot object. The pressure plate 17, which may be provided with (preferably electric) heating means 32 (diagrammatically indicated in Figure 8), if desired, is thereby heated in such a manner that the aforesaid edges slightly cool down under optimal conditions, so that a liquid- and/or gastight joint is formed.

When for example the first pipe section 1-1 has a diameter larger than (or equal to) the diameter of the second pipe section 2-1, it is preferred to design the pressure plate 17 as a multi-part plate, more in particular a two-part plate. Such a pressure plate 17 built up of two parts 17-1 and 17-2 is shown in Figure 8. With this plate it is still possible to sleeve the second pipe section 2-1, which has a smaller (or the same) diameter, over the multi-part pressure plate 17 and bring the parts 17-1 and 17-2 of the pressure plate 17 together at the location of the opening already formed in the platform 4, so as to attach the first larger-diameter pipe section 1-1 in the manner already explained above.

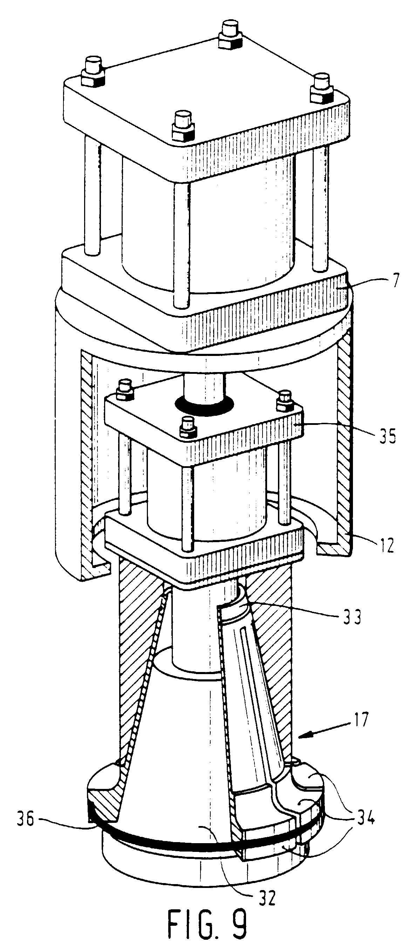

Figure 9 diagrammatically shows a device according to the invention, by means of which a first pipe section (not shown) can be jointed in situ to a second pipe section (likewise not shown) already being in use. The device is provided with a pressure body 17 built up of a cone 32, which can move reciprocatingly, actuated by a piston/cylinder assembly 35, along the inner surface of a cone shell 33 provided with spring-loaded tongues. Said spring-loaded tongues are under a radially inward pressure of an extension spring 36. The cone shell 33 with the spring-loaded tongues 34 are shown in a position in which the device can be inserted into an opening of a second pipe section already being in use. Once present in said opening, the cone 32 will move up with espect to the illustrated position under the influence of the piston/cylinder assembly 35, so that the spring-loaded tongues within the second pipe section spread out, temporarily fixing the device with respect to the second pipe section. Then the pressure element 12 is moved downwards by means of the piston/cylinder assembly 7 (thereby exerting pressure on the free outer circumferential edge of the first pipe section in a manner corresponding with the situation of Figure 3), so that the edges of the first and the second pipe sections are clamped together in the manner already explained before. Accordingly the radially outward parts of the tongues 34 function as a pressure plate thereby. The device proposed herein is particularly suitable for jointing of pipe sections in situ in a liquid- and/or gastight manner.

## Claims

1. A method for jointing at least two plastic elements (1-1, 2-1) in a liquid- and/or gastight manner, whereby an edge (18) of a first plastic element (1-1) is at least partially placed in an opening of a second plastic element (2-1), the edge (18) of the first plastic element (1-1) being folded over an edge (3) of the opening of the second plastic element (2-1) under plastic deformation, using a pressure body (17), characterized in that the edge (18) of the first plastic element (1-1) is pressed against a rigid curved guiding surface (20) of a rigid pressure body (17) being placed in the second plastic element (2-1) at the opening thereof, that the edge (18) of the first plastic element (1-1) along the guiding surface (20) is pushed radially outwards and over the edge (3) of the opening of the second plastic element (2-1), that the edges (18,3) of both plastic elements (1-1,2-1) are pressed together to form a joint by exerting pressure on opposite sides of the joint by means of the pressure body (17) and a pressure means, whereby the edge (3) of the opening of the second plastic element (2-1) is clamped between edges (18,19) of the first plastic element (1-1), or between the edge (18) of the first plastic element (1-1) and an edge (25) of an additional external element (26), and that use is made of a sealing element (24) at least partially between the edges (18,3).

2. A method according to claim 1, characterized in that the at least two plastic elements (1-1,2-1) are jointed at an angle varying between 0° and 180°.

3. A method according to claim 1 or 2, characterized in that the at least two plastic elements (1-1,2-1) are pipe sections.

4. A method according to any of the preceding claims 1-3, characterized in that said plastic deformation is achieved by heating.

5. A method according to claim 4, characterized in that said pressure body (17) is at least partially heated by heating means (32) present in said pressure body (17).

6. A method according to claim 3, 4 or 5, characterized in that the edge (18) of said first pipe section (1-1) is preheated prior to said first pipe section (1-1) being placed, at least partially, in the opening of said second pipe section (2-1).

7. A method according to any of the preceding claims 3-6, characterized in that the sealing element is a sealing ring (24) being provided along the opening of said second pipe section (2-1) prior to jointing said first and said second pipe sections (1-1,2-1).

8. A method according to any of the preceding claims 1-7, characterized in that the sealing element (24) has a substantially L-shaped or U-shaped cross-section.

9. A method according to any one of the preceding claims 3-8, characterized in that the opening of said second pipe section (2-1) is provided by means of a sawing/cutting operation, whereby said second pipe section (2-1) is held at an angle with respect to a sawing/cutting device, said angle at least substantially corresponding with an angle between the jointed first and second pipe sections (1-1,2-1).

10. A device for carrying out a method according to any one of the preceding claims 1-9, comprising a pressure body (17) which at least substantially consists of a rigid pressure plate having a rigid curved guiding surface (20), said plate being provided with heating means, and a pressure means provided with a pressure element (12) which cooperates with the pressure plate.

11. A device according to claim 10, characterized in that said pressure plate (17) comprises at least two parts (17-1,17-2), which are movable with respect to each other.

12. A device according to claim 10 or 11, characterized in that said pressure plate (17) is provided with electric heating means (32).

13. A device according to any one of the preceding claims 10-12, characterized in that said pressure means include a piston/cylinder assembly (7).

14. A device according to any one of the preceding claims 10-12, characterized in that said pressure means are provided with a pressure element (12), which can move into and out of said first pipe section (1-1).

15. A device according to claim 14, characterized in that said pressure element (12) includes a projecting pull rod (13), which may come into engagement with a drawing attachment, which may push or pull the pull rod (13) in a direction parallel to the axis of said first pipe section (1-1).

16. A device according to claim 15, characterized in that said drawing attachment at least substantially consists of a drawing block (8,9) provided with means (15,16) for engaging the pull rod (13), said drawing block (8,9) being movable in a direction parallel to the central axis of said second pipe section (2-1).

17. A device according to claim 10 for jointing at least two pipe sections (1-1,2-1) in situ in a liquid- and/or gastight manner, whereby spreading means are provided, which can move between a first position, in which said device can at least partially be placed in an opening of a pipe section (2-1), and a second position, in which said device can temporarily be positioned with respect to said pipe section.

18. A device according to claim 17, whereby said spreading means are provided with a cone (32), which can move along the inner surface of a cone shell (33) provided with springloaded tongues (34).

## Patentansprüche

1. Ein Verfahren zum flüssigkeits- und/oder gasdichten Verbinden von wengistens zwei Kunststoffelementen (1-1, 2-1), bei welchem eine Kante (18) eines ersten Kunststoffelementes (1-1) wenigstens teilweise in eine Öffnung eines zweiten Kunststoffelementes (2-1) eingesetzt wird, wobei die Kante (18) des ersten Kunststoffelementes (1-1) über eine Kante (3) der Öffnung des zweiten Kunststoffelementes (2-1) unter Kunststoffverformung bei Einsatz eines Druckkörpers (17) umgelegt wird, dadurch gekennzeichnet, daß die Kante (18) des ersten Kunststoffelementes (1-1) gegen eine starre, gekrümmte Führungsfläche (20) eines starren Druckkörpers (17), der in dem zweiten Kunststoffelement (2-1) an dessen Öffnung anzuordnen ist, gedrückt wird, daß die Kante (18) des ersten Kunststoffelementes (1-1) entlang der Führungsfläche (20) radial nach außen und über die Kante (3) der Öffnung des zweiten Kunststoffelementes (2-1) gedrückt wird, daß die Kanten (18, 3) von beiden Kunststoffelementen (1-1, 2-1) zur Bildung einer Verbindung zusammengedrückt werden, indem Druck auf gegenüberliegende Seiten der Verbindung mittels des Druckkörpers (17) und eines Druckmittels ausgeübt wird, wodurch die Kante (3) von der Öffnung des zweiten Kunststoffelementes (2-1) zwischen den Kanten (18, 19) des ersten Kunststoffelementes (1-1) oder zwischen der Kante (18) des ersten Kunststoffelementes (1-1) und einer Kante (25) eines zusätzlichen äußeren Elementes (26) geklemmt wird, und daß ein Dichtelement (24) wenigstens teilweise zwischen den Kanten (18, 3) eingesetzt/verwendet wird.

2. Ein Verfahren nach Anspruch 1, dadurch gekennzeichnet, daß wenigstens zwei Kunststoffelemente (1-1, 2-1) in einem zwischen 0° und 180° liegenden Winkel verbunden werden.

3. Ein Verfahren nach Anspruch 1 oder 2, dadurch gekennzeichnet, daß wenigstens zwei Kunststoffelemente (1-1, 2-1) Rohrabschnitte sind.

4. Ein Verfahren nach einem oder mehreren der vorhergehenden Ansprüche 1 bis 3, dadurch gekennzeichnet, daß die Kunststoffverformung durch Erwärmen erreicht wird.

5. Ein Verfahren nach Anspruch 4, dadurch gekennzeichnet, daß der Druckkörper (17) wenigstens teilweise von Heizmitteln (32) erwärmt wird, die in dem Druckkörper (17) enthalten sind.

6. Ein Verfahren nach Anspruch 3, 4 oder 5, dadurch gekennzeichnet, daß die Kante (18) des ersten Rohrabschnittes (1-1) vorgewärmt wird, bevor der erste Rohrabschnitt (1-1) wenigstens teilweise in die Öffnung des zweiten Rohrabschnittes (2-1) eingesetzt wird.

7. Ein Verfahren nach einem oder mehreren der vorhergehenden Ansprüche 3 bis 6, dadurch gekennzeichnet, daß das Dichtelement ein Dichtring (24) ist, der entlang der Öffnung des zweiten Rohrabschnittes (2-1) vor dem Verbinden des ersten und des zweiten Rohrabschnittes (1-1, 2-1) vorgesehen wird.

8. Ein Verfahren nach einem oder mehreren der vorhergehenden Ansprüche 1 bis 7, dadurch gekennzeichnet, daß das Dichtelement (24) ein im wesentlichen L-förmigen oder U-förmigen Querschnitt aufweist.

9. Ein Verfahren nach einem oder mehreren der vorhergehenden Ansprüche 3 bis 8, dadurch gekennzeichnet, daß die Öffnung des zweiten Rohrabschnittes (2-1) mittels eines Säge-/Schneidvorgangs vorgesehen wird, bei welchem der zweite Rohrabschnitt (2-1) in einem Winkel in bezug zu einer Säge-/Schneidvorrichtung gehalten wird, wobei der Winkel wenistens im wesentlichen einem Winkel zwischen den zu verbindenden ersten und zweiten Rohrabschnitten (1-1, 2-1) entspricht.

10. Vorrichtung zum Ausführen eines Verfahrens nach einem oder mehreren der vorhergehenden Ansprüche 1 bis 9 umfaßt einen Druckkörper (17), der wenigstens im wesentlichen aus einer starren Druckplatte besteht, die eine starre, gekrümmte Führungsfläche (20) aufweist, wobei die Platte mit Heizmitteln ausgestattet ist, sowie einem Druckmittel, das mit einem Druckelement (12) versehen ist, welches mit der Druckplatte zusammenwirkt.

11. Eine Vorrichtung nach Anspruch 10, dadurch gekennzeichnet, daß die Druckplatte (17) aus wenigstens zwei Teilen (17-1, 17-2) besteht, die in bezug zueinander beweglich sind.

12. Eine Vorrichtung nach Anspruch 10 oder 11, dadurch gekennzeichnet, daß die Druckplatte (17) mit elektrischen Heizmitteln (32) versehen ist.

13. Eine Vorrichtung nach einem oder mehreren der Ansprüche 10 bis 12, dadurch gekennzeichnet, daß die Druckmittel eine Kolben-Zylinder-Einheit (7) enthalten.

14. Eine Vorrichtung nach einem oder mehreren der vorhergehenden Ansprüche 10 bis 12, dadurch gekennzeichnet, daß die Druckmittel mit einem Druckelement (12) versehen sind, das in den ersten Rohrabschnitt (1-1) hinein und aus diesem heraus bewegt werden kann.

15. Eine Vorrichtung nach Anspruch 14, dadurch gekennzeichnet, daß das Druckelement (12) eine vorstehende Zugstange (13) enthält, die in Eingriff mit einer Zugvorrichtung kommen kann, welche die Zugstange (13) in einer Richtung parallel zur Achse des ersten Rohrabschnittes (1-1) schieben oder ziehen kann.

16. Eine Vorrichtung nach Anspruch 15, dadurch gekennzeichnet, daß die Zugvorrichtung wenigstens im wesentlichen aus einem Zugblock (8, 9) besteht, der mit Mitteln (15, 16) zur Ineingriffnahme der Zugstange (13) zu versehen ist, wobei der Zugblock (8, 9) in einer Richtung parallel zur zentralen Achse des zweiten Rohrabschnittes (2-1) beweglich ist.

17. Eine Vorrichtung nach Anspruch 10 zum flüssigkeits- und/ oder gasdichten Verbinden von wenigstens zwei Rohrabschnitten (1-1, 2-1) in situ (in jeder Lage) bei welcher Spreizmittel vorgesehen sind, welche bewegt werden können zwischen einer ersten Position, in der die Vorrichtung wenigstens teilweise in eine Öffnung eines Rohrabschnittes (2-1) eingesetzt werden kann, und einer zweiten Position, in der die Vorrichtung zeitweilig relativ zum Rohrabschnitt angebracht werden kann.

18. Eine Vorrichtung nach Anspruch 17, bei welcher die Spreizmittel mit einem Konus (32) versehen sind, der entlang der inneren Fläche eines mit federbelasteten Zungen (34) versehenen Konusmantels (33) bewegt werden kann.

## Revendications

1. Procédé pour réaliser la jonction d'au moins deux éléments plastiques (1-1, 2-1) d'une manière étanche aux liquides et/ou aux gaz, dans lequel un rebord (18) d'un premier élément plastique (1-1) est au moins partiellement placé dans une ouverture d'un second élément plastique (2-1), le rebord (18) du premier élément plastique (1-1) étant replié par dessus un rebord (3) de l'ouverture du second élément plastique (2-1) sous déformation plastique, en utilisant un corps de pression (17), caractérisé en ce que le rebord (18) du premier élément plastique (1-1) est pressé contre une surface de guidage incurvée rigide (20) d'un corps de pression rigide (17) qui est placé dans le second élément plastique (2-1) à son ouverture, en ce que le rebord (18) du premier élément plastique (1-1) le long de la surface de guidage (20) est poussé radialement vers l'extérieur et par dessus le rebord (3) de l'ouverture du second élément plastique (2-1), en ce que les rebords (18, 3) des deux éléments plastiques (1-1, 2-1) sont pressés ensemble de façon à former une jonction en exerçant une pression sur les côtés opposés de la jonction au moyen du corps de pression (17) et de moyens de pression, grâce à quoi le rebord (3) de l'ouverture du second élément plastique (2-1) est verrouillé entre les rebords (18, 19) du premier élément plastique (1-1) ou entre le rebord (18) du premier élément plastique (1-1) et un rebord (25) d'un élément externe additionnel (26), et en ce que l'on utilise un élément d'étanchéité (24) au moins partiellement entre les rebords (18, 3).

2. Procédé selon la revendication 1, caractérisé en ce que l'on réalise la jonction d'au moins deux éléments plastiques (1-1, 2-1) sous un angle qui varie entre 0° et 180°.

3. Procédé selon la revendication 1 ou la revendication 2, caractérisé en ce que les au moins deux éléments plastiques (1-1, 2-1) sont des sections de tuyaux.

4. Procédé selon l'une quelconque des revendications 1 à 3, caractérisé en ce que ladite déformation plastique est effectuée par chauffage.

5. Procédé selon la revendication 4, caractérisé en ce que ledit corps de pression (17) est au moins partiellement chauffé par des moyens de chauffage (32) qui sont présents dans ledit corps de pression (17).

6. Procédé selon la revendication 3, 4 ou 5, caractérisé en ce que le rebord (18) de ladite première section de tuyau (1-1) est préchauffée, au moins partiellement, avant que ladite première section de tuyau (1-1) soit mise en place dans l'ouverture de ladite seconde section de tuyau (2-1).

7. Procédé selon l'une quelconque des revendications précédentes 3 à 6, caractérisé en ce que l'élément d'étanchéité est une bague d'étanchéité (24) qui est prévue le long de l'ouverture de ladite seconde section de tuyau (2-1) avant d'effectuer la jonction de ladite première et de ladite seconde sections de tuyaux (1-1, 2-1).

8. Procédé selon l'une quelconque des revendications précédentes 1 à 7, caractérisé en ce que l'élément d'étanchéité (24) a une section transversale sensiblement en forme de L ou de U.

9. Procédé selon l'une quelconque des revendications précédentes 3 à 8, caractérisé en ce que l'ouverture de ladite seconde section de tuyau (2-1) est effectuée au moyen d'une opération de sciage/découpage, grâce à quoi ladite seconde section de tuyau (2-1) est maintenue sous un certain angle par rapport au dispositif de sciage/découpage, ledit angle correspondant au moins sensiblement à l'angle de la jonction prévue entre ladite première et ladite seconde section de tuyaux (1-1, 2-1).

10. Dispositif pour la mise en oeuvre d'un procédé conforme à l'une quelconque des revendications précédentes 1 à 9, comprenant un corps de pression (17) qui, au moins en substance, est constitué par une plaque de pression rigide présentant une surface de guidage incurvée rigide (20), ladite plaque comportant des moyens de chauffage, et des moyens de pression comprenant un élément de pression (12) qui coopère avec la plaque de pression.

11. Dispositif selon la revendication 10, caractérisé en ce que ladite plaque de pression (17) comprend au moins deux parties (17-1, 17-2), qui sont mobiles l'une par rapport à l'autre.

12. Dispositif selon la revendication 10 ou 11, caractérisé en ce que ladite plaque de pression (17) comporte des moyens de chauffage électrique (32).

13. Dispositif selon l'une quelconque des revendications précédentes 10 à 12, caractérisé en ce que lesdits moyens de pression comprennent un ensemble piston/cylindre (7).

14. Dispositif selon l'une quelconque des revendications précédentes 10 à 12, caractérisé en ce que lesdits moyens de pression comprennent un élément de pression (12), lequel peut se déplacer en pénétrant dans ladite première section de tuyau (1-1) et en en sortant

15. Dispositif selon la revendication 14, caractérisé en ce que ledit élément de presion (12) comprend une barre de traction qui fait saillie (13), laquelle peut venir en engagement avec une fixation d'entraînement, laquelle peut pousser ou tirer la barre de traction (13) dans une direction parallèle à l'axe de ladite première section de tuyau (1-1).

16. Dispositif selon la revendication 15, caractérisé en ce que ladite fixation d'entraînement est constituée au moins en substance d'un bloc d'entraînement (8, 9) comportant des moyens (15, 16) pour engager la barre de traction (13), ledit bloc d'entraînement (8, 9) étant mobile dans une direction parallèle à l'axe central de ladite seconde section de tuyau (2-1).

17. Dispositif selon la revendication 10 pour réaliser la jonction d'au moins deux sections de tuyaux (1-1, 2-1) in situ d'une manière qui soit étanche aux liquides et/ou aux gaz, dans lequel des moyens d'expansion sont prévus, qui peut se déplacer entre une première position dans laquelle ledit dispositif peut au moins en partie être placé dans une ouverture d'une section de tuyau (2-1), et une seconde position dans laquelle ledit dispositif peut temporairement être positionné par rapport à ladite section de tuyau.

18. Dispositif selon la revendication 17, dans lequel lesdits moyens d'expansion comportent un cône (32), lequel peut se déplacer le long de la surface interne d'une coquille conique (33) pourvue de langues chargées élastiquement (34).
